# EUROPÄISCHE PATENTANMELDUNG

(11) **EP 0 645 392 A1**
(43) Veröffentlichungstag der Anmeldung: **29.03.1995**
(21) Anmeldenummer: 94202403.5
(22) Anmeldetag: 23.08.1994
(51) Int. Cl.: C07F 1/00

(54) **Stabile, nicht pyrophore Lösungen von Lithiumdiorganoamiden und Verfahren zu ihrer Herstellung**

(30) Priorität: 27.09.1993 DE 4332652
(71) Anmelder: METALLGESELLSCHAFT AG, D-60323 Frankfurt am Main (DE)
(72) Erfinder: Weiss, Wilfried, Dr., D-61440 Oberursel (DE); Wietelmann, Ulrich, Dr., D-61381 Friedrichsdorf (DE); Lischka, Uwe, D-60322 Frankfurt am Main (DE); Emmel, Ute, D-65929 Frankfurt am Main (DE)

(57) **Zusammenfassung**

Die Erfindung betrifft eine stabile, nicht pyrophore Lösung eines Lithiumdiorganoamids der allgemeinen Formel Li NR'R'' in inerten, flüssigen Kohlenwasserstoffen, wobei R' und R'' Alkylreste mit 2 bis 6 C-Atomen sind und die Lösung ein Alkoholat mit 3 bis 6 C-Atomen enthält.

## Beschreibung

Die Erfindung betrifft stabile, nicht pyrophore Lösungen von Lithiumdiorganoamiden und Verfahren zu ihrer Herstellung.

Lithiumdiorganoamide, insbesondere das Lithiumdiisopropylamid (LDA), werden in breitem Umfang als Synthesemittel für die Herstellung von Pharmazeutika und als Spezialchemikalien aufgrund ihrer starken Brönsted-Basizität und ihrer geringen Nucleophilie eingesetzt. Lithiumdiorganoamide sind wenig löslich in Kohlenwasserstoff-Lösemitteln, und außerdem tritt in diesen Lösemitteln in der Regel rasch eine irreversible Ausfällung von oligomeren oder polymeren Lithiumdiorganoamid-Kristalliten ein. Deshalb sind Lösungen von Lithiumdiorganoamiden in Kohlenwasserstoffen kommerziell nicht erhältlich. Obwohl Lithiumdiorganoamide gut in Ethern löslich sind, sind solche Lösungen nicht handelsüblich, weil sie sich bereits bei Raumtemperatur sehr schnell zersetzen. Eine große Anzahl von Anwendern stellt deshalb die benötigten Mengen an Lithiumdiorganoamid unmittelbar vor deren Einsatz selbst her. Typischerweise erfolgt dies durch die Reaktion von n-Butyllithium mit Diisopropylamin in kaltem Tetrahydrofuran. Diese Reaktion ist einfach durchzuführen. Sie besitzt allerdings Sicherheitsrisiken für solche Anwender, die nicht mit der Handhabung der sehr reaktiven Organolithiumverbindungen vertraut sind. Daneben ist die Synthese von Lithiumdiisopropylamid durch die Reaktion von Lithiummetall mit Diisopropylamin in Gegenwart von Styren oder Isobuten als Elektronenakzeptoren in Diethylether bekannt (M.T. Reetz u. W.F. Maier, Liebigs Annalen der Chemie 1980 (10), Seiten 1471 bis 1473).

In dem Dokument WO-86/03744 werden stabile, nicht pyrophore Lösungen von Lithiumdiisopropylamid in Kohlenwasserstoff-Lösemitteln offenbart, die eine begrenzte Menge Tetrahydrofuran enthalten. Der hauptsächliche Nachteil von Lithiumdiisopropylamid in etherischen Lösungen oder in Kohlenwasserstoff-Lösungen, die eine begrenzte Menge Tetrahydrofuran enthalten, d.h. ≦ 1,0 Mol/Mol LDA, ist deren begrenzte Stabilität. So verlieren LDA-Lösungen mit einem maximalen äquimolaren THF-Anteil bei der Lagerung bei 30 bis 40°C über 30 Tage signifikant an Aktivität (25 bis 50 %). Bei 0 bis 10°C wird dagegen in diesem Zeitraum nur ein geringer Aktivitätsverlust beobachtet. Allerdings findet bei Lagerungstemperaturen ≦ 0°C Kristallisation in der Lösung statt, wenn die Konzentration von LDA und THF > 2,0 molar ist.

Aus dem Dokument DE-A-39 05 857 sind bi-metallische Diorganoamid-Zusammensetzungen, insbesondere Li-Mg-bis-diorganoamide, in flüssigen Kohlenwasserstoff-Lösemitteln bekannt, deren thermische Stabilität und deren Stabilität in bezug auf eine Niederschlagsbildung gegenüber den reinen Lithiumdiorganoamid-Lösungen erhöht ist. Die Anwesenheit eines zweiten Metalls und/oder eines Metallsalzes macht allerdings zusätzliche Reinigungsoperationen nach dem Einsatz dieses Synthesemittels erforderlich. Weiterhin ist die Langzeitstabilität durch die notwendige Anwesenheit von Lewis-Basen, wie THF, Methyl-THF, Dimethylether, Diethylether, Dibutylether oder tertiären Aminen, wie Trimethylamin, Triethylamin oder Tetramethylethylendiamin verbesserungsbedürftig.

Aufgabe der vorliegenden Erfindung ist es, eine stabile, nicht pyrophore Lösung eines Lithiumdiorganoamids und Verfahren zu ihrer Herstellung anzugeben, wobei auf die bekannten Stabilisatorzusätze verzichtet wird.

Ausgehend von dieser Aufgabe schlägt die Erfindung eine Lösung eines Lithiumdiorganoamids der allgemeinen Formel Li NR'R'' in inerten, flüssigen Kohlenwasserstoffen vor, wobei R' und R'' Alkylreste mit 2 bis 6 C-Atomen sind und die Lösung ein Alkoholat mit 3 bis 6 C-Atomen enthält.

In vorteilhafter Weise sind R' und R'' ein Ethyl-, Isopropyl- oder Cyclohexylrest, wobei der Isopropylrest im Hinblick auf das Lithiumdiisopropylamid und dessen Reaktivität bevorzugt ist.

In vorteilhafter Weise ist in der Lithiumdiorganoamid-Lösung ein Alkalialkoholat anwesend. Besonders bevorzugt ist die Anwesenheit eines Lithiumalkoholats, wobei das Alkoholat ein tertiäres Alkoholat ist. Durch die Verwendung eines Lithiumalkoholats werden keine Fremdionen in die Lösung eingetragen und gleichzeitig wird die Herstellung dieser Lösung vereinfacht. Insbesondere die aus tertiären Alkoholen gebildeten Alkoholate und darunter bevorzugt die Alkoholate von t-Pentanol, t-Butanol und Isopropanol zeigen überraschenderweise eine sehr gute Stabilisierungswirkung.

In bevorzugter Weise liegt in der Lösung das Lithiumdiorganoamid und das Alkoholat im Molverhältnis von 100 : 2 bis 100 : 10 vor.

Als inerte, flüssige Kohlenwasserstoffe werden in vorteilhafter Weise Aliphaten, Cycloaliphaten, Aromaten oder Alkylaromaten mit 5 bis 10 C-Atomen oder Gemische dieser Lösemittel eingesetzt, wobei insbesondere Hexan und Cyclohexan als Lösemittel bevorzugt werden.

Die Konzentration des Lithiumdiorganoamids in der Lösung liegt im Bereich von 0,1 bis 2,0 mol/kg, vorzugsweise 0,5 bis 1,0 mol/kg, wodurch eine hinreichend konzentrierte, aber gleichzeitig hinsichtlich ihrer Viskosität und Kristallisationsstabilität gut handhabbare Lösung zur Verfügung gestellt wird.

In bevorzugter Weise wird die Lösung eines Lithiumdiorganoamids hergestellt, indem zu einer Lösung einer Lithiumalkyl- oder -arylverbindung in einem inerten, flüssigen Kohlenwasserstoff-Lösemittel eine unterstöchiometrische Menge eines Alkohols mit 3 bis 6 C-Atomen gegeben wird und anschließend die verbleibende Menge an Lithiumorganyl mit einem sekundären Amin umgesetzt wird.

Bevorzugt ist die Umsetzung von mindestens 2 % und maximal 50 % des vorliegenden Lithiumorganyls mit dem Alkohol, wobei insbesondere der Umsatz von 2 % bis 10 % des Lithiumorganyls mit dem Alkohol bzw. ein Molverhältnis von Lithiumdiorganoamid zu Lithiumalkoholat von 100 : 2 bis 100 : 10 zu einer für einen längeren Zeitraum lagerstabilen Lösung führt.

Eine lagerstabile Lösung eines Lithiumdiorganoamids in einem inerten, flüssigen Kohlenwasserstoff-Lösemittel wird auch erhalten, indem ein Gemisch einer Lösung eines Lithiumdiorganoamids in einem inerten, flüssigen Kohlenwasserstoff und einem Alkoholat oder einer Alkoholat-Lösung in einem inerten, flüssigen Kohlenwasserstoff hergestellt wird, wobei die Reihenfolge der Zugabe der Gemischkomponenten beliebig ist.

Eine für einen längeren Zeitraum lagerstabile Lösung eines Lithiumdiorganoamids wird überraschenderweise auch erhalten, wenn Lithiumgranulat oder Lithiumpulver in einem inerten, flüssigen Kohlenwasserstoff-Lösemittel mit einem sekundären Amin und einem Alkohol mit 3 bis 6 C-Atomen versetzt und unter Zudosierung eines Elektronenakzeptors, wie Styren oder Isobuten, umgesetzt wird.

Die erfindungsgemäß erhaltene Lösung ist überraschenderweise trotz des Alkoholatgehaltes als sehr gutes Synthesemittel für Metallierungs- oder Deprotonierungsreaktionen geeignet.

Die nachfolgend angegebenen Beispiele sollen den Erfindungsgegenstand näher erläutern.

### Beispiel 1

In einem inertisierten 2 l 3-Hals-Rundkolben mit Gaseinleitung, Thermometer und Tropftrichter mit Druckausgleich, wurden 520 mmol Lithiumhexyl in Hexan bei 20°C innerhalb von 60 Minuten mit der äquimolaren Menge Di-i-propylamin (DIPA) umgesetzt. Anschließend wurden 260 mmol einer 2-molaren Lithium-t-butylat (LTB)-Lösung in Hexan bei 20°C zugesetzt. Die leicht trübe Lösung wurde filtriert. Es wurde eine klare, gelb gefärbte Lösung mit einem Gehalt an Lithium von 1,79 mmol/g erhalten.

### Beispiel 2

Analog Beispiel 1 wurden 520 mmol Lithiumhexyl in Hexan-Lösung mit der äquimolaren Menge DIPA umgesetzt, wobei daran anschließend nur 25 mmol 2-molarer LTB-Lösung in Hexan zugesetzt wurden. Nach Filtration wurde eine klare, gelbe Lösung erhalten, die einen Gehalt an aktivem Lithium von 1,31 mmol/g aufwies. Beim Abkühlen auf -10°C wurde die Lösung stark viskos, zeigte aber bis -10°C keine Ausfällung. Unterhalb -10°C begann eine Ausfällung, die sich irreversibel fortsetzte.

### Beispiel 3

In einer Apparatur analog Beispiel 1 wurden 650 mmol Lithiumpulver mit 695 mmol DIPA und 0,2 g Lithiumhydrid in 600 ml Hexan versetzt und ca. 30 Minuten gerührt. Die Suspension wurde mit 31 mmol t-Butanol als 1:1-Mischung mit Hexan versetzt und zum Sieden erhitzt. Am Siedepunkt wurden innerhalb von einer Stunde 310 mmol Styren als 1:1-Mischung mit Hexan zudosiert. Das Reaktionsgemisch wurde nach dem Abkühlen über eine G4-Fritte filtriert. Es wurden 490 g klares, gelbes Filtrat mit einem Gehalt an aktivem Lithium von 1,09 mmol/g erhalten. Die Bestimmung der Aktivbase mittels Farbindikator (4-Phenyl-azo-diphenylamin) gegen Benzoesäure liefert einen Gehalt an LDA von 1,08 mmol/g und entspricht einer Ausbeute von 85,3 %.

### Beispiel 4

Analog Beispiel 1 wurden 100 ml (223 mmol) Lithiumhexyl, gelöst in Hexan, mit 11 mmol t-Pentanol und 212 mmol DIPA umgesetzt. Die viskose, gelbe Lösung wurde mit Hexan verdünnt. Es wurde eine LDA-Lösung mit einem Gehalt an aktivem Lithium von 1,30 mmol/g erhalten, die bei Lagerung über 3 Monate bei Raumtemperatur stabil war. Bei der Lagerung im Kühlschrank (+4°C) sank der Gehalt an aktivem Lithium nach 36 Stunden auf 0,76 mmol/g; nach 72 Stunden bei +4°C wurde ein Gehalt an aktivem Lithium von 0,56 mmol/g bestimmt.

### Beispiel 5

Analog Beispiel 1 wurden 534 mmol Lithiumhexyl, gelöst in 590 g Hexan, mit 25 mmol t-Butanol und 508 mmol DIPA umgesetzt. Nach Filtration der leicht trüben Lösung wurden 644 g Filtrat mit einem Gehalt an aktivem Lithium von 0,80 mmol/g erhalten. Während einer Lagerung über 6 Monate bei Raumtemperatur blieb die Lösung stabil, bei Kühlschrank-Temperaturen (+4°C) sank der Gehalt an aktivem Lithium auf 0,49 mmol/g ab, und es schieden sich nadelige Kristalle an der Kolbenwand ab. Auch bei einer Lagerung bei 50°C über 24 Stunden blieb die Lösung, wie thermogravimetrische Untersuchungen zeigten, stabil.

### Beispiel 6

Analog Beispiel 1 wurden 525 mmol Lithiumbutyl, gelöst in 534 g Cyclohexan, mit 25 mmol t-Butanol und anschließend mit 500 mmol DIPA umgesetzt. Die gelbe Lösung wurde bei Raumtemperatur im Ölpumpenvakuum von 770 ml auf 650 ml eingeengt. In der Lösung wurde ein Gehalt an aktivem Lithium von 1,01 mmol/g festgestellt. Bei Lagerung über 3 Monate bei Raumtemperatur fiel der Gehalt an aktivem Lithium auf 0,95 mmol/g. Bei Lagerung über drei Monate bei Kühlschranktemperaturen (+4°C) wurde ein Abfall des Gehaltes an aktivem Lithium auf 0,53 mmol/g festgestellt. Bei Lagerung der gleichen Ausgangslösung über drei Monate bei Kühlhaustemperaturen (-15°) sank der Gehalt an aktivem Lithium auf 0,35 mmol/g.

### Beispiel 7

Versuch 6 wurde wiederholt mit dem Unterschied, daß 472 mmol Lithiumbutyl, gelöst in 516 g Toluen, mit 22 mmol t-Butanol versetzt und mit 450 mmol DIPA umgesetzt wurden. Die gelbe, leicht trübe Lösung wurde bei Raumtemperatur im Ölpumpenvakuum von 560 auf 500 g eingeengt und filtriert. Der Gehalt an aktivem Lithium betrug 0,93 mmol/g. Während einer dreimonatigen Lagerung bei Raumtemperatur fiel der Gehalt an aktivem Lithium auf 0,53 mmol/g. Bei Kühlschranktemperaturen (+4°C) sank der Gehalt an aktivem Lithium im gleichen Zeitraum auf 0,23 mmol/g, wobei gleichfalls ein Niederschlag beobachtet wurde. Bei Kühlhaustemperaturen (-15°C) fiel ein Niederschlag aus und der Gehalt an aktivem Lithium sank auf 0,18 mmol/g.

### Beispiel 8

Versuch Nr. 7 wurde wiederholt mit dem Unterschied, daß 483 mmol Lithiumbutyl, gelöst in 526 g Ethylbenzen, mit 23 mmol t-Butanol versetzt und anschließend mit 460 mmol DIPA umgesetzt wurden. Es wurde eine klare, dunkelgelbe Lösung erhalten, die bei Raumtemperatur im Ölpumpenvakuum bis zu einem Gehalt von 1,02 mmol/g aktivem Lithium eingeengt wurde. Bei dreimonatiger Lagerung bei Raumtemperatur fiel ein Niederschlag aus. Der Gehalt an aktivem Lithium sank auf 0,28 mmol/g und der Gesamtbasen-Gehalt auf 0,52 mmol/g. Bei Kühlschranktemperaturen wurde nach dem gleichen Lagerungszeitraum gleichfalls eine Niederschlagsbildung beobachtet und ein Rest-Gesamtbasen-Gehalt von 0,43 mmol/g ermittelt. Bei Lagerung unter Kühlhausbedingungen wurden in der Lösung ein Lithium-Gehalt von 0,17 mmol/g und ein Gesamtbasen-Gehalt von 0,30 mmol/g bestimmt.

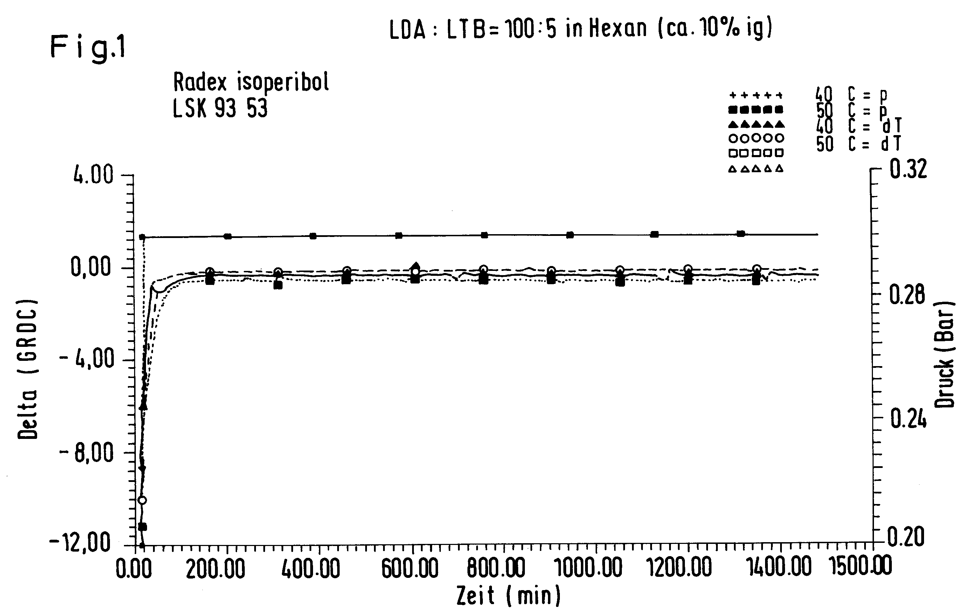

## Patentansprüche

1. Stabile, nicht pyrophore Lösung eines Lithiumdiorganoamids der allgemeine Formel Li NR'R'' in inerten, flüssigen Kohlenwasserstoffen, wobei R' und R'' Alkylreste mit 2 bis 6 C-Atomen sind und die Lösung ein Alkoholat mit 3 bis 6 C-Atomen enthält.

2. Lösung eines Lithiumdiorganoamids nach Anspruch 1, dadurch gekennzeichnet, daß R' und R'' ein Ethyl-, i-Propyl- oder Cyclohexylrest ist.

3. Lösung eines Lithiumdiorganoamids nach Anspruch 1 oder 2, dadurch gekennzeichnet, daß ein Alkalialkoholat anwesend ist.

4. Lösung eines Lithiumdiorganoamids nach einem der Ansprüche 1 bis 3, dadurch gekennzeichnet, daß ein Lithium-Alkoholat anwesend ist.

5. Lösung eines Lithiumdiorganoamids nach einem oder mehreren der Ansprüche 1 bis 4, dadurch gekennzeichnet, daß das Alkoholat ein tertiäres Alkoholat ist.

6. Lösung eines Lithiumdiorganoamids nach einem oder mehreren der Ansprüche 1 bis 5, dadurch gekennzeichnet, daß in der Lösung das Lithiumdiorganoamid und das Alkoholat im Molverhältnis von 100 : 2 bis 100 : 10 vorliegen.

7. Lösung eines Lithiumdiorganoamids nach einem oder mehreren der Ansprüche 1 bis 6, dadurch gekennzeichnet, daß als Kohlenwasserstoff Aliphaten, Cycloaliphaten, Aromaten oder Alkylaromaten mit 5 bis 10 C-Atomen oder deren Gemische als Lösemittel eingesetzt werden.

8. Lösung eines Lithiumdiorganoamids nach einem oder mehreren der Ansprüche 1 bis 7, dadurch gekennzeichnet, daß die Konzentration des Lithiumdiorganoamids in der Lösung im Bereich von 0,1 bis 2 mol/kg liegt.

9. Verfahren zur Herstellung einer Lösung nach einem oder mehreren der Ansprüche 1 bis 8, dadurch gekennzeichnet, daß zu einer Lösung eines Lithiumalkyls oder -aryls in einem inerten, flüssigen Kohlenwasserstoff-Lösemittel eine unterstöchiometrische Menge eines Alkohols mit 3 bis 6 C-Atomen gegeben und anschließend die verbleibende Menge an Lithiumorganyl mit einem sekundären Amin umgesetzt wird.

10. Verfahren zur Herstellung einer Lösung nach Anspruch 9, dadurch gekennzeichnet, daß mindestens 2 % und maximal 50 % des vorliegenden Lithiumorganyls mit dem Alkohol umgesetzt werden.

11. Verfahren zur Herstellung einer Lösung nach einem oder mehreren der Ansprüche 1 bis 8, dadurch gekennzeichnet, daß ein Gemisch einer Lösung eines Lithiumdiorganoamids in einem inerten, flüssigen Lösemittel und einem Alkoholat oder einer Alkoholat-Lösung in einem inerten, flüssigen Lösemittel hergestellt wird, wobei die Reihenfolge der Zugabe der Gemischkomponenten beliebig ist.

12. Verfahren zur Herstellung einer Lösung nach einem oder mehreren der Ansprüche 1 bis 8, dadurch gekennzeichnet, daß Lithiumgranulat oder Lithiumpulver in einem inerten, flüssigen Kohlenwasserstoff-Lösemittel mit einem sekundären Amin und einem Alkohol mit 3 bis 6 C-Atomen versetzt und unter Zudosierung eines Elektronenakzeptors, wie Styren oder Isobuten, umgesetzt wird.

13. Verwendung einer Lösung nach einem oder mehreren der Ansprüche 1 bis 8 als Synthesemittel für Metallierungs- oder Deprotonierungsreaktionen.
